# EUROPEAN PATENT APPLICATION

(11) **EP 4 790 425 A1**
(43) Date of publication of application: **12.08.2026**
(21) Application number: 24874486.4
(22) Date of filing: 19.09.2024
(51) Int. Cl.: G01N 35/10

(54) **AUTOMATED ANALYSIS DEVICE AND SAMPLE DISPENSING METHOD THEREFOR**

(30) Priority: 06.10.2023 JP 2023174430
(71) Applicant: Hitachi High-Tech Corporation, Minato-ku Tokyo 105-6409 (JP)
(72) Inventor: FUKAYA, Masashi, Tokyo 105-6409 (JP)
(74) Representative: MERH-IP Matias Erny Reichl Hoffmann Patentanwälte PartG mbB
(86) International application number: PCT/JP2024/033482
(87) International publication number: WO 2025/074877

(57) **Abstract**

An object of the invention is to provide an automatic analyzer that reduces carryover between liquids and achieves high dispensing accuracy. The automatic analyzer includes: a dispensing mechanism configured to dispense a sample contained in a sample container or a reagent contained in a reagent container into a reaction container by operation of a syringe coupled to a nozzle; and a control unit configured to control the dispensing mechanism, in which the automatic analyzer performs a discharge operation in which the control unit operates the syringe in a discharge direction after the dispensing mechanism aspirates the sample or the reagent and before the dispensing mechanism discharges the sample or the reagent to the reaction container, the discharge operation includes a first discharge operation performed in a state where the nozzle is at a position of the sample container or the reagent container, and a second discharge operation performed while the nozzle is moving from the position of the sample container or the reagent container to a position of the reaction container, and an operation amount of the syringe in the first discharge operation is smaller than an operation amount of the syringe in the second discharge operation.

## Description

### Technical Field

The present invention relates to an automatic analyzer and a dispensing method thereof.

### Background Art

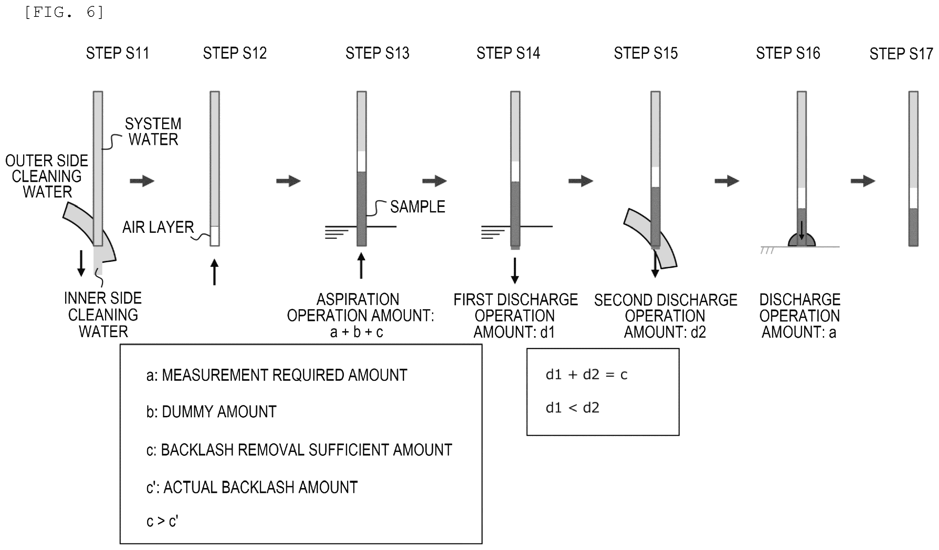

An automatic analyzer for analyzing a biological sample such as blood or urine includes a dispensing mechanism for dispensing a liquid including a sample or a reagent into a reaction container. The dispensing mechanism aspirates or discharges the liquid by operating a syringe coupled to a nozzle. Here, since there is a gap (backlash) in a coupling portion between mechanical components constituting the syringe, when an operation direction of the syringe is reversed, minute idling due to the gap occurs. Therefore, for example, before the liquid aspirated by the dispensing mechanism is discharged into the reaction container, a syringe operation (backlash removal operation) for eliminating the idling is required. For example, PTL 1 discloses that a specimen probe is lowered at a position of a specimen container to aspirate a specimen in the specimen container, and then a backlash removal operation is performed at the position of the specimen container to discharge the specimen from the specimen probe (paragraph 0038, FIG. 6, and the like).

### Citation List

### Patent Literature

PTL 1: JP2019-174318A

### Summary of Invention

### Technical Problem

After the specimen probe aspirates the specimen, when the syringe is operated in a discharge direction as the backlash removal operation, the idling of the syringe is eliminated, and when the syringe continues to be operated in the discharge direction thereafter, the specimen in the specimen probe is discharged. In the specimen to be discharged at this time, not only the specimen to be dispensed this time but also the previous specimen to be dispensed last time slightly remain. Therefore, when the backlash removal operation after the specimen probe aspirates the specimen is performed only when the specimen probe is at a position of the specimen container as in the technique disclosed in PTL 1, the previous specimen to be discharged back to the specimen container cannot be ignored. Since the previous specimen is discharged back to the specimen container and accumulated every time dispensing is repeated, there is a possibility that dispensing accuracy is lowered.

In view of the above problem, an object of the invention is to provide an automatic analyzer and a dispensing method thereof that reduce carryover between liquids and achieve high dispensing accuracy.

### Solution to Problem

In order to achieve the above object, the invention provides an automatic analyzer. The automatic analyzer including: a dispensing mechanism configured to dispense a sample contained in a sample container or a reagent contained in a reagent container into a reaction container by operation of a syringe coupled to a nozzle; and a control unit configured to control the dispensing mechanism, in which the automatic analyzer performs a discharge operation in which the control unit operates the syringe in a discharge direction after the dispensing mechanism aspirates the sample or the reagent and before the dispensing mechanism discharges the sample or the reagent to the reaction container, the discharge operation includes a first discharge operation performed in a state where the nozzle is at a position of the sample container or the reagent container, and a second discharge operation performed while the nozzle is moving from the position of the sample container or the reagent container to a position of the reaction container, and an operation amount of the syringe in the first discharge operation is smaller than an operation amount of the syringe in the second discharge operation.

### Advantageous Effects of Invention

According to the invention, it is possible to provide an automatic analyzer and a dispensing method thereof that reduce carryover between liquids and achieve high dispensing accuracy.

### Brief Description of Drawings

[FIG. 1] FIG. 1 is a perspective view schematically showing an overall configuration of an automatic analyzer.
[FIG. 2] FIG. 2 is a top view schematically showing main configurations of the automatic analyzer.
[FIG. 3] FIG. 3 is a view schematically showing a flow path configuration of a sample dispensing mechanism.
[FIG. 4] FIG. 4 is a view showing an operation sequence of sample dispensing in an automatic analyzer according to a comparative example.
[FIG. 5] FIG. 5 is a view showing a mechanism of carryover derived from a previous specimen remaining inside a nozzle.
[FIG. 6] FIG. 6 is a view showing an operation sequence of sample dispensing in an automatic analyzer according to Embodiment 1.
[FIG. 7A] FIG. 7A is a table showing values of a first discharge operation amount and a second discharge operation amount, which are set in the comparative example and Embodiment 1.
[FIG. 7B] FIG. 7B is a graph showing an average value of a carryover ratio between specimens in the comparative example and Embodiment 1.
[FIG. 8] FIG. 8 is a view showing an operation sequence of sample dispensing in an automatic analyzer according to Embodiment 2.
[FIG. 9] FIG. 9 is a view showing a variation of a nozzle cleaning method.

### Description of Embodiments

Hereinafter, embodiments of the invention will be described with reference to the drawings.

### (Overall Configuration of Automatic Analyzer)

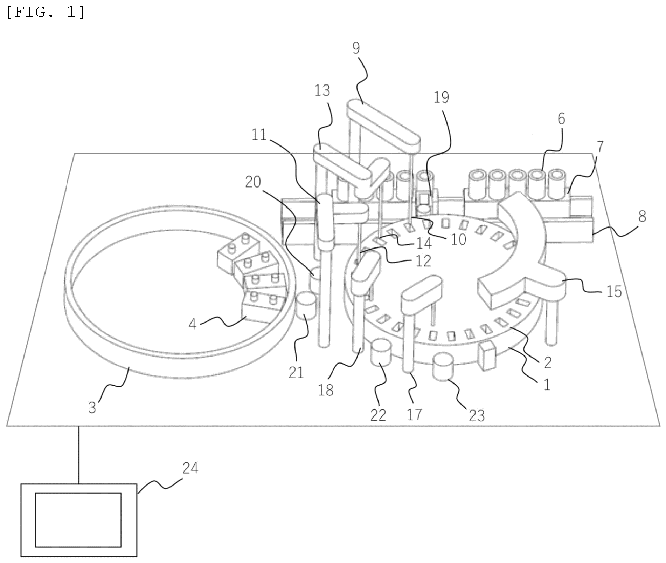

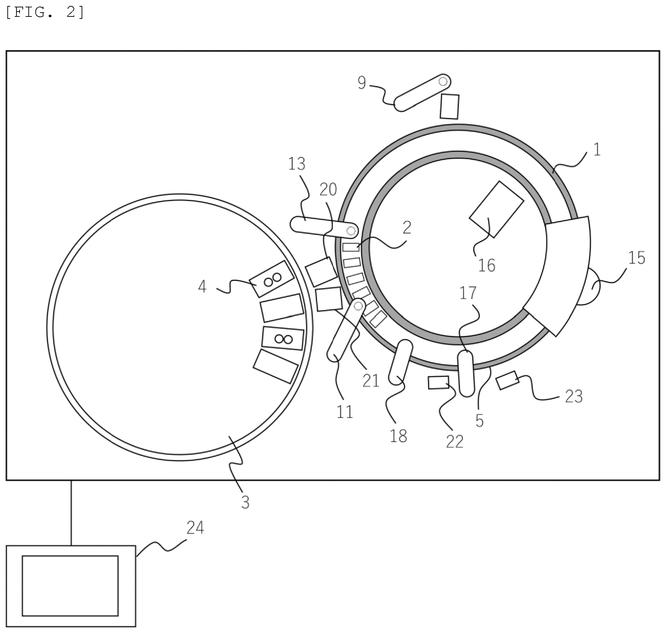

An automatic analyzer is a device that dispenses a sample (specimen) such as blood and urine and a reagent into a reaction container 2 to cause the sample and the reagent to react with each other, and that measures a liquid obtained by reacting the reagent and the sample. FIG. 1 is a perspective view schematically showing an overall configuration of the automatic analyzer, and FIG. 2 is a top view schematically showing main configurations of the automatic analyzer. As shown in FIGS. 1 and 2, the automatic analyzer includes a sample transport mechanism 8, a reagent disk 3, a reaction disk 1, a sample dispensing mechanism 9, reagent dispensing mechanisms 11 and 13, stirring mechanisms 17 and 18, a spectrophotometer 16 (measurement unit), a cleaning mechanism 15, a control unit 24, and the like.

Reaction containers 2 are arranged circumferentially on the reaction disk 1. The reaction container 2 is a container for storing a mixed liquid obtained by mixing a sample and a reagent, and a plurality of the reaction containers 2 are arranged on the reaction disk 1. The sample transport mechanism 8 is disposed near the reaction disk 1, and the sample transport mechanism 8 transports a sample rack 7 mounted with a plurality of sample containers 6 each containing a sample to be analyzed. The reaction container 2 is immersed in a reaction bath 5 (see FIG. 2) filled with a thermally conductive medium (for example, constant-temperature water) whose temperature is controlled to, for example, 37°C, and the temperature of the reaction container 2 is constantly maintained at 37°C by circulating the constant-temperature water in the reaction bath 5.

A plurality of reagent bottles 4 (reagent containers) each containing a reagent to be used for analysis can be placed on the circumference of the reagent disk 3, and the reagent disk 3 also has a function serving as a refrigerator for cooling the reagent bottles 4.

The sample dispensing mechanism 9 for dispensing a sample from the sample container 6 to the reaction container 2 is disposed between the reaction disk 1 and the sample transport mechanism 8. The sample dispensing mechanism 9 is rotatable in a horizontal direction and movable in an upper-lower direction, and includes a sample nozzle 10 having a tip end facing downward. A cleaning tank 19 for cleaning the sample nozzle 10 with cleaning water is disposed in an operating range of the sample dispensing mechanism 9. The reagent dispensing mechanisms 11 and 13 for dispensing a reagent from the reagent bottle 4 to the reaction container 2 are disposed between the reaction disk 1 and the reagent disk 3. The reagent dispensing mechanisms 11 and 13 are rotatable in the horizontal direction and movable in the upper-lower direction, and the reagent dispensing mechanisms 11 and 13 respectively include reagent nozzles 12 and 14 each having a tip end facing downward. Cleaning tanks 20 and 21 for respectively cleaning the reagent nozzles 12 and 14 with cleaning water are disposed in operating ranges of the reagent dispensing mechanisms 11 and 13.

The stirring mechanisms 17 and 18, the spectrophotometer 16 (see FIG. 2) for measuring absorbance of a reaction liquid by measuring light from a light source (not shown) transmitted through the reaction liquid in the reaction container 2, the cleaning mechanism 15 for cleaning the used reaction container 2, and the like are disposed around the reaction disk 1.

The stirring mechanisms 17 and 18 are rotatable in the horizontal direction and movable in the upper-lower direction, and stir a mixed liquid (reaction liquid) of the sample and the reagent by being inserted into the reaction container 2. Cleaning tanks 22 and 23 for cleaning the stirring mechanisms 17 and 18 with cleaning water are disposed in operating ranges of the stirring mechanisms 17 and 18.

The control unit 24 is implemented by a computer or the like, controls an operation of each mechanism constituting the automatic analyzer, and executes calculation processing for obtaining a concentration of a predetermined component in a sample. In FIG. 1, a coupling relationship between each mechanism constituting the automatic analyzer and the control unit 24 is omitted for simplicity of illustration.

In the automatic analyzer configured as described above, analysis processing is generally performed in the following flow. First, the control unit 24 controls the sample nozzle 10 of the sample dispensing mechanism 9 to dispense, into the reaction container 2 on the reaction disk 1, a sample in the sample container 6 that is placed on the sample rack 7 and is transported to the vicinity of the reaction disk 1 by the sample transport mechanism 8. Thereafter, the control unit 24 cleans the sample nozzle 10 in the cleaning tank 19. Next, the control unit 24 controls the reagent nozzles 12 and 14 of the reagent dispensing mechanisms 11 and 13 to dispense a reagent in the reagent bottle 4 placed on the reagent disk 3 into the reaction container 2 into which the sample was previously dispensed. Thereafter, the control unit 24 cleans the reagent nozzles 12 and 14 in the cleaning tanks 20 and 21. Subsequently, the control unit 24 controls the stirring mechanisms 17 and 18 to stir a mixed liquid of the sample and the reagent in the reaction container 2. Thereafter, light generated from a light source is transmitted through the reaction container 2 containing the mixed liquid, and the control unit 24 controls the spectrophotometer 16 to measure an intensity of the transmitted light. Light intensity information measured by the spectrophotometer 16 is transmitted to the control unit 24 via an A/D converter and an interface. Then, the control unit 24 calculates a concentration of a predetermined component of an analysis item based on the received light intensity information, and displays a calculation result on a display unit (not shown) or the like, or stores the calculation result in a storage unit (not shown).

### [Configuration of Dispensing Mechanism]

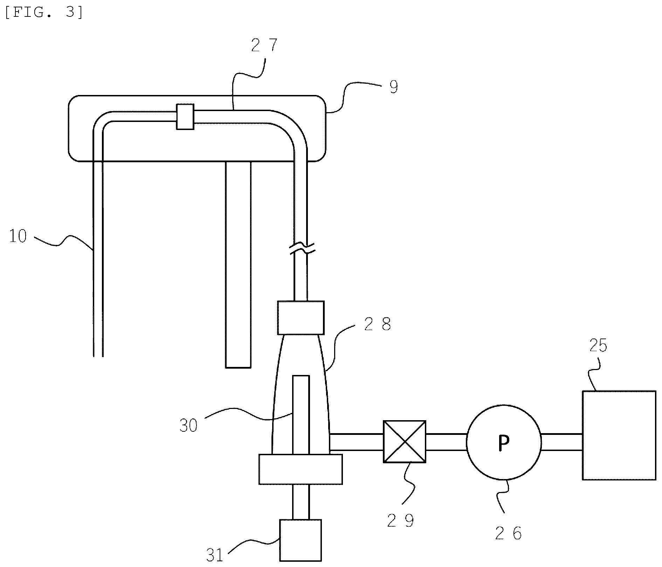

Next, a configuration of a dispensing mechanism will be specifically described with reference to FIG. 3. Hereinafter, the sample dispensing mechanism 9 will be described as an example, and the same applies to the reagent dispensing mechanisms 11 and 13. FIG. 3 is a view schematically illustrating a flow path configuration of the sample dispensing mechanism. The sample dispensing mechanism 9 mainly includes the sample nozzle 10 and a syringe 28, and dispenses the sample in the sample container 6 into the reaction container 2 by operating the syringe 28 coupled to the sample nozzle 10. Here, the syringe 28 is provided with a plunger 30, and a motor 31 is coupled to the plunger 30. The motor 31 drives the plunger 30 to aspirate or discharge a sample to be dispensed from the sample nozzle 10.

A flow path from the sample nozzle 10 to a water supply pump 25 via the syringe 28, an electromagnetic valve 29, and a liquid feeding pump 26 is formed by a tube 27, and the flow path is filled with system water. The system water is water used for pressure propagation or the like, and is generally purified water such as ion exchange water. When an inner side of the sample nozzle 10 is cleaned, the electromagnetic valve 29 is opened, and the system water (cleaning water) supplied from the water supply pump 25 is discharged from a tip end of the sample nozzle 10.

When the sample dispensing mechanism 9 dispenses a sample, first, the sample nozzle 10 is moved to a position (sample aspiration position) where the sample is aspirated from the sample container 6 while maintaining a state where the electromagnetic valve 29 is closed. Next, in a state where the tip end of the sample nozzle 10 reaches a liquid surface of the sample, the plunger 30 is driven in an aspiration direction to draw the sample into the sample nozzle 10. Thereafter, the sample nozzle 10 is moved to a position (sample discharge position) where the sample is discharged into the reaction container 2, and in this state, the plunger 30 is driven in a discharge direction to discharge the sample into the reaction container 2. After the sample dispensing mechanism 9 dispenses the sample, the sample nozzle 10 is moved to the cleaning tank 19, and an inner side and an outer side of the sample nozzle 10 are cleaned.

Next, an operation of the sample dispensing mechanism 9 will be described in detail.

### (Dispensing Method According to Comparative Example)

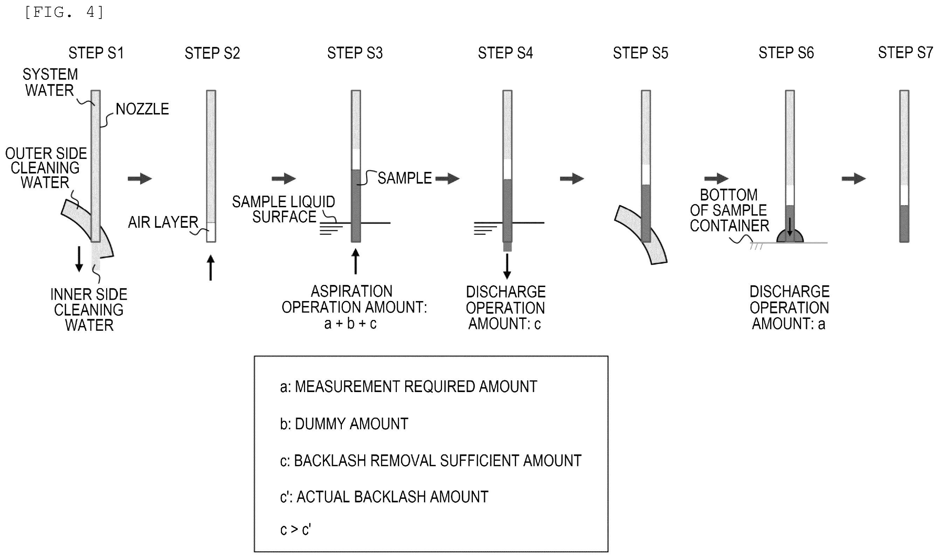

First, a sample dispensing method in an automatic analyzer in the related art will be described as a comparative example with reference to FIG. 4. FIG. 4 is a view showing an operation sequence of sample dispensing in the automatic analyzer according to the comparative example.

First, in step S1, in a state where the sample nozzle 10 is at a position of the cleaning tank 19, the control unit 24 controls the liquid feeding pump 26 to supply system water to clean the inner side and the outer side of the sample nozzle 10.

Next, in step S2, while the sample nozzle 10 is moving from the position of the cleaning tank 19 to a position of the sample container 6 (sample aspiration position), the control unit 24 operates the syringe 28 in the aspiration direction to aspirate segmentation air. The segmentation air is air that separates the system water and the sample, and serves as an air layer that prevents the sample concentration from being diluted due to contact between the sample and the system water during sample aspiration.

Next, the sample nozzle 10 is lowered at the sample aspiration position, and in step S3, in a state where the sample nozzle 10 is immersed in a liquid surface in the sample container 6, the control unit 24 operates the syringe 28 in the aspiration direction to aspirate a predetermined amount of sample. An aspiration operation amount of the syringe 28 in step S3 is measurement required amount a + dummy amount b + backlash removal sufficient amount c. The measurement required amount a refers to an amount of the sample required for measurement in a measurement item. The dummy amount b refers to an amount of the sample to be excessively aspirated in order to reduce the influence of diluting caused by the system water in the sample nozzle 10. The backlash removal sufficient amount c refers to a syringe operation amount sufficient to remove the backlash of the syringe 28.

The backlash is a gap present in a coupling portion between mechanical components constituting the syringe, and the backlash removal operation is an operation of eliminating minute idling caused by the gap when an operation direction of the syringe is reversed. However, a backlash amount c' actually possessed by the syringe (hereinafter, may be simply referred to as an "actual backlash amount") has an individual difference for each syringe, and does not necessarily coincide with a theoretical value of a backlash amount estimated based on a design value of the syringe. Therefore, the backlash removal sufficient amount c is set to an amount obtained by adding a margin to the theoretical value of the backlash amount, for example, an amount about twice the theoretical value.

Next, immediately after step S3, in step S4, the control unit 24 operates the syringe 28 in the discharge direction in a state where the sample nozzle 10 is immersed in the liquid surface in the sample container 6. Since discharge operation amount of the syringe 28 in step S4 is the backlash removal sufficient amount c, which is larger than the actual backlash amount c', the backlash of the syringe 28 can be reliably removed. Therefore, in step S4, after the backlash is completely removed, a part (specifically, an amount corresponding to c - c') of the sample aspirated in step S3 is discharged back to the sample container 6.

Next, after the sample nozzle 10 is raised, the sample nozzle 10 is moved to the position of the cleaning tank 19, and in step S5, the control unit 24 controls the liquid feeding pump 26 to supply the system water to clean the outer side of the sample nozzle 10. Step S5 may be omitted.

Next, when the sample nozzle 10 is moved to the position of the reaction container 2 and the tip end of the sample nozzle is lowered to the bottom of the reaction container 2, the control unit 24 operates the syringe 28 in the discharge direction again in step S6. A discharge operation amount of the syringe 28 in step S6 is the measurement required amount a. Since an operation direction of the syringe 28 in step S6 is the same as a previous operation direction, that is, the discharge direction in step S4, it is not necessary to consider backlash.

Next, when there is no other measurement request for the sample after the sample nozzle 10 is moved to the cleaning tank 19, the control unit 24 discharges the dummy amount of the sample in the sample nozzle 10 in step S7, and returns to step S1.

### (Mechanism of Carryover between Liquids)

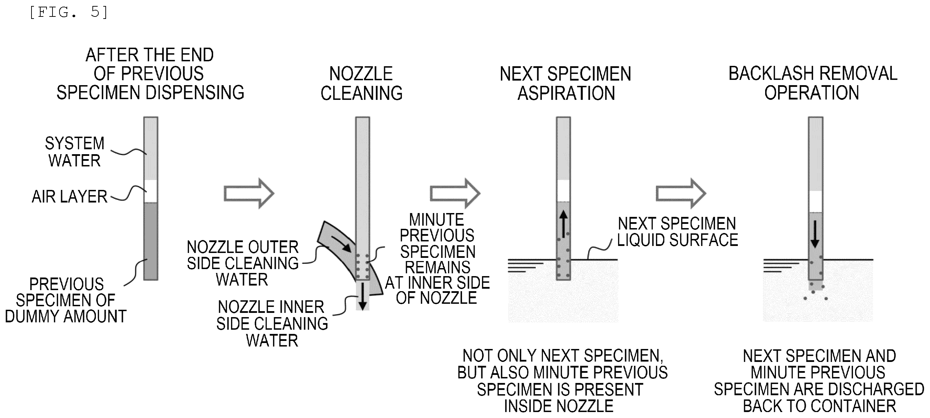

Here, a mechanism of carryover between liquids in which a previously dispensed liquid is brought into a next liquid will be described. Hereinafter, a case where a liquid is a specimen will be described as an example, but the same applies to a case where a liquid is a reagent. There are two main causes of the carryover between specimens. The first cause is that a part of a previous specimen adhered to an outer side of a nozzle remains without being washed out even after the outer side of the nozzle is cleaned, and is mixed into a next liquid. The second cause is that a part of a previous specimen adhered to an inner side of a nozzle remains without being washed out even after the inner side of the nozzle is cleaned, and is mixed into a next specimen. Hereinafter, the second cause will be described in detail with reference to FIG. 5.

FIG. 5 is a view illustrating a mechanism of carryover derived from a previous specimen that remains inside a nozzle. As shown in FIG. 5, when dispensing of the previous specimen is completed, a dummy amount of the previous specimen inside the nozzle is discharged, and the inner side of the nozzle is cleaned with cleaning water in the cleaning tank. However, since the previous specimen slightly remains inside the nozzle without being washed out, when a next specimen is aspirated, not only the next specimen but also a minute amount of the previous specimen are present inside the nozzle. When the backlash removal operation is performed in this state, the previous specimen is discharged together with the next specimen back to the sample container containing the next specimen. Even if an amount of the previous specimen to be discharged back to the sample container in one backlash removal operation is small, when dispensing is repeated and the number of the backlash removal operations increases, the previous specimen discharged back to the sample container is also accumulated, and an influence on the dispensing accuracy may not be negligible.

Here, as a method of preventing carryover of the previous specimen, it is conceivable to increase a cleaning effect by increasing a cleaning time or increasing an amount of cleaning water (per unit time). However, increasing the cleaning time may lead to a decrease in a processing capacity of the automatic analyzer, and it is not easy to increase water pressure to increase the amount of cleaning water due to the configuration of the analyzer. Even in a case of special cleaning using a detergent, which is different from regular cleaning using system water, an extra operation is required, which may lead to a decrease in a processing capacity of the automatic analyzer. Further, as another method of preventing carryover of the previous specimen, a method of reducing a range (contaminated range) to which the specimen adhered is also considered. However, the contaminated range inside the nozzle is determined by an aspiration amount of the specimen, and it is difficult to uniformly reduce the contaminated range regardless of a measurement item.

Therefore, in the present embodiment, in order to prevent the carryover derived from the previous specimen remaining inside the nozzle, the nozzle discharges the specimen while moving from a position of the sample container to a position of the reaction container, and an amount of the specimen to be discharged back into the sample container is reduced. Hereinafter, specific contents of a dispensing method will be described with reference to two embodiments.

### (Embodiment 1)

In Embodiment 1, a discharge operation of a syringe including a backlash removal operation is performed after a dispensing mechanism aspirates a sample and before the dispensing mechanism discharges the sample to a reaction container, which is similar to the comparative example, but the discharge operation is performed twice, which is different from the comparative example. FIG. 6 is a view showing an operation sequence of sample dispensing in an automatic analyzer according to Embodiment 1.

Step S11, step S12, step S13, step S16, and step S17 are the same as step S1, step S2, step S3, step S6, and step S7 in the comparative example.

Step S14 is a first discharge operation performed in a state where the sample nozzle 10 is at the position of the sample container 6. In step S14, the control unit 24 operates the syringe 28 in the discharge direction in a state where the sample nozzle 10 is immersed in the liquid surface in the sample container 6, which is similar to step S4 in the comparative example. However, a discharge operation amount of the syringe 28 in step S14 is a first discharge operation amount d1 that is smaller than the backlash removal sufficient amount c, which is different from the comparative example. Therefore, a liquid to be discharged back to the sample container 6 can be reduced, and an amount of a previous specimen contained in the liquid can also be reduced.

Next, step S15 is a second discharge operation performed in a state where the sample nozzle 10 is at the position of the cleaning tank 19. A discharge operation amount of the syringe 28 in step S15 is a second discharge operation amount d2, and is set such that the sum of the first discharge amount d1 and the second discharge amount d2 is the backlash removal sufficient amount c described above. Therefore, at the time when the second discharge operation in step S15 is completed, the backlash of the syringe 28 is reliably removed. Further, in step S15, the outer side of the sample nozzle 10 is cleaned in parallel with the second discharge operation. However, a time for cleaning the outer side is longer than a time of the second discharge operation, and a state where the cleaning water hits the sample nozzle 10 is maintained from the start to the end of the discharge of the sample in the second discharge operation. If the sample is discharged in a state where the cleaning water does not hit the tip end of the sample nozzle 10, the sample may scatter. In order to prevent the scattering of the sample, it is desirable that the sample nozzle 10 is stopped in the second discharge operation.

In the present embodiment, the effect of preventing carryover is enhanced by setting the first discharge operation amount d1 to be smaller than the second discharge operation amount d2. When attention is focused on the effect of preventing the carryover, a ratio of the first discharge operation amount d1 can be further reduced, and a ratio of the second discharge operation amount d2 can be further increased. Here, although the sample nozzle 10 is stopped in the cleaning tank 19 and performs the second discharge operation while the sample nozzle 10 is moving from the position of the sample container 6 to the position of the reaction container 2, a time during which the sample nozzle 10 is stopped in the cleaning tank 19 is limited in order to maintain the processing capacity of the automatic analyzer. For example, when the time during which the sample nozzle 10 can be stopped in the cleaning tank 19 is, for example, 60 ms, a time allocated to the second discharge operation is 40 ms or less in consideration of a pressure response delay of the syringe 28. Therefore, when the ratio of the second discharge operation amount d2 is too large, it may be difficult to complete the second discharge operation or the outer side cleaning within the time of 40 ms. In this case, in the first discharge operation, it is necessary to finish the discharge operation to some extent, and depending on the first discharge operation amount d1, the backlash actually possessed by the syringe 28 is removed until the end of the first discharge operation, and a part (d1 - c') of the sample is discharged back to the sample container 6. However, since the amount of the sample to be discharged back to the sample container 6 can be reduced as compared with the comparative example, the carryover can be prevented.

As a method of completing the second discharge operation within a limited time in which the sample nozzle 10 is positioned in the cleaning tank 19, it is also conceivable to operate the syringe 28 at a high speed in the second discharge operation. However, when the operation of the syringe 28 is too fast, the sample may be discharged with an amount more than intended due to pressure pulsation, which affects dispensing accuracy. Therefore, it is desirable that an operation speed of the syringe 28 in the second discharge operation is a slowest speed in the entire dispensing operation (equal to a speed when the segmentation air is aspirated in step S12). For example, when the syringe 28 discharges the sample at a resolution of 0.02 µL/pulse and a speed of 1000 pulses/second, the second discharge operation amount d2 that can be performed in a time of 40 ms is 0.8 µL.

On the other hand, when there is a margin in the time during which the sample nozzle 10 is stopped in the cleaning tank 19 in step S15, the first discharge operation amount d1 can be further reduced. Therefore, when the first discharge operation amount d1 is set to an amount less than a theoretical value of a backlash amount estimated based on a design value of the syringe (a lower limit value when the theoretical value varies depending on an individual difference), the backlash of the syringe 28 may remain at the end of the first discharge operation. Then, an amount of the sample to be discharged back to the sample container 6 in the first discharge operation becomes substantially zero, and carryover can be further prevented. In this case, the removal of the backlash is completed during the second discharge operation, and then the sample is discharged from the sample nozzle 10.

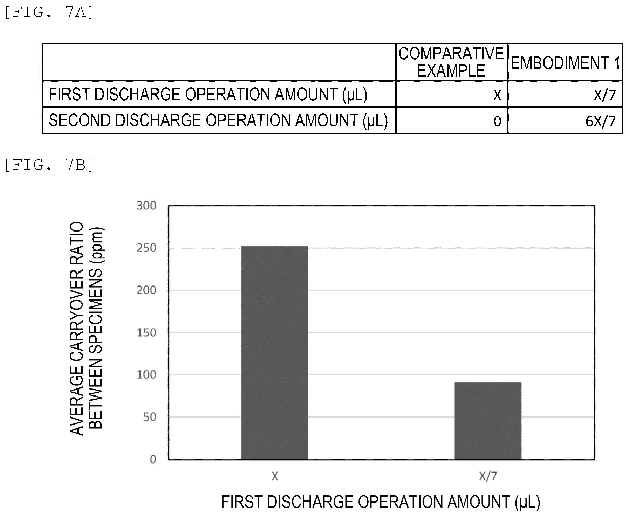

Next, effects of Embodiment 1 will be described with reference to FIGS. 7A and 7B. FIG. 7A is a table showing values of the first discharge operation amount and the second discharge operation amount, which are set in the comparative example and Embodiment 1, and FIG. 7B is a graph showing an average value of a carryover ratio between specimens in the comparative example and Embodiment 1. In the comparative example, a discharge operation of the syringe including the backlash removal operation performed before the discharge to the reaction container is performed once, but for convenience, the discharge operation is divided into a first discharge operation and a second discharge operation, and a second discharge operation amount is set to zero. The carryover ratio between specimens indicates a ratio at which a target component of a specimen A is brought into a specimen B when a previous specimen is the specimen A for contamination at a high concentration and a next specimen is the specimen B for contamination at a low concentration.

As shown in FIG. 7A, when the first discharge operation amount in the comparative example is X, the first discharge operation amount is X/7 and the second discharge operation amount is 6X/7 in Embodiment 1. That is, in Embodiment 1, the first discharge operation amount is reduced to 1/7 of the first discharge operation amount in the comparative example. As a result, as shown in FIG. 7B, it can be seen that the carryover ratio between specimens can be reduced by 65% in Embodiment 1 as compared with the comparative example. A reduction in the carryover ratio between specimens varies depending on conditions such as an initial concentration of a specimen for contamination, viscosity and other liquid properties, and a temperature of a measurement environment. As described above, according to Embodiment 1, since an amount of the sample to be discharged back to the sample container can be reduced, carryover derived from the sample remaining inside the nozzle can be reduced, and an automatic analyzer with high dispensing accuracy can be achieved.

### (Embodiment 2)

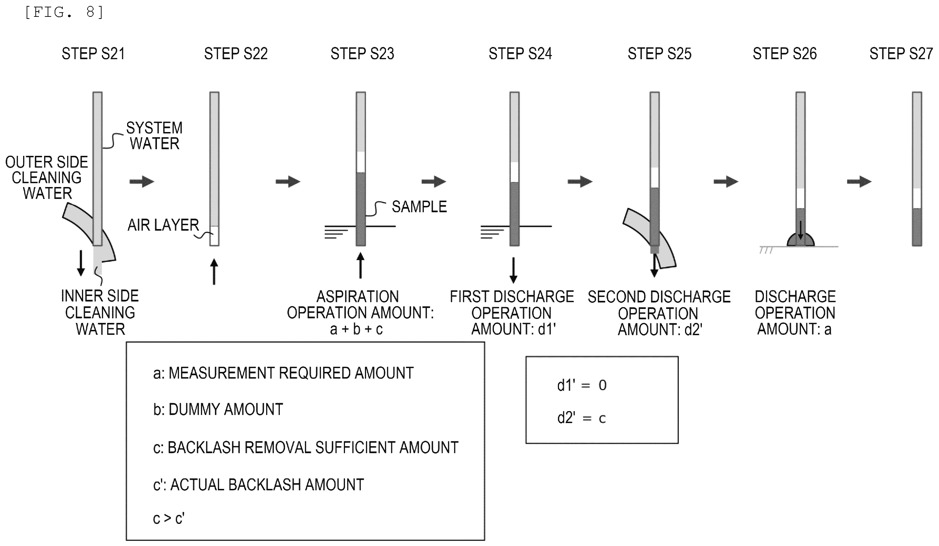

In Embodiment 2, the first discharge operation amount in Embodiment 1 is set to zero. FIG. 8 is a view showing an operation sequence of sample dispensing in an automatic analyzer according to Embodiment 2.

Step S21, step S22, step S23, step S26, and step S27 are the same as step S11, step S12, step S13, step S16, and step S17 in Embodiment 1.

In step S24, since a first discharge operation amount d1' is set to zero, the first discharge operation is not performed.

Next, in step S25, the second discharge operation is performed. A second discharge operation amount d2' in Embodiment 2 is larger than the second discharge operation amount d2 in Embodiment 1, and is the same as the backlash removal sufficient amount c.

According to Embodiment 2, since the sample is not discharged back to the sample container, carryover derived from the sample remaining inside the nozzle can be made substantially zero, and an automatic analyzer with higher dispensing accuracy can be achieved. However, since the second discharge operation amount is large in Embodiment 2, it is limited to a case where there is a margin in the time during which the sample nozzle 10 is stopped in the cleaning tank 19.

### (Appendix)

The invention is not limited to the embodiments described above, and includes various modifications. For example, although carryover when dispensing a sample is prevented in the embodiments, the same applies to a case of dispensing a reagent.

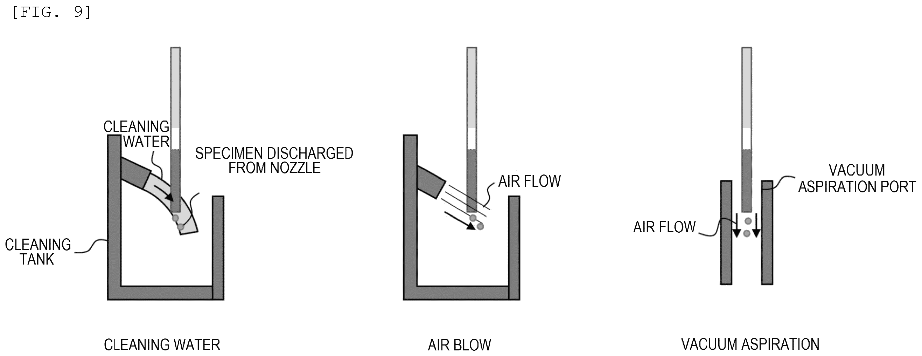

Further, although the outer side of the sample nozzle 10 is cleaned by cleaning water in parallel with the second discharge operation in the embodiments, the cleaning may be executed by another method. FIG. 9 is a view showing a variation of a nozzle cleaning method. As shown in FIG. 9, examples of the cleaning method other than the cleaning water include a method using air blow and a method using vacuum aspiration.

Further, although the second discharge operation is performed at the position of the cleaning tank 19 in the embodiments, the second discharge operation may be performed at a position other than the position of the cleaning tank 19 if the sample nozzle 10 is moving from the position of the sample container 6 to the position of the reaction container 2. The second discharge operation may include a plurality of operations performed when the nozzle is located at different positions. For example, in the first half of the second discharge operation, the tip end of the nozzle may be cleaned with cleaning water at the position of the cleaning tank 19, and then the nozzle may be moved to an air blow position, and in the second half of the second discharge operation, the residual cleaning water adhered to the nozzle may be removed by vacuum aspiration. In this manner, the dispensing accuracy can be further stabilized by combining a plurality of cleaning methods.

### Reference Signs List

1: reaction disk
2: reaction container
3: reagent disk
4: reagent bottle
6: sample container
7: sample rack
8: sample transport mechanism
9: sample dispensing mechanism
10: sample nozzle
11, 13: reagent dispensing mechanism
12, 14: reagent nozzle
15: cleaning mechanism
17, 18: stirring mechanism
19: cleaning tank
20, 21: cleaning tank
22, 23: cleaning tank
24: control unit
25: water supply pump
26: liquid feeding pump
27: tube
28: syringe
29: electromagnetic valve
30: plunger
31: motor

## Claims

1. An automatic analyzer comprising:
a dispensing mechanism configured to dispense a sample contained in a sample container or a reagent contained in a reagent container into a reaction container by operation of a syringe coupled to a nozzle; and
a control unit configured to control the dispensing mechanism, wherein
the automatic analyzer performs a discharge operation in which the control unit operates the syringe in a discharge direction after the dispensing mechanism aspirates the sample or the reagent and before the dispensing mechanism discharges the sample or the reagent to the reaction container,
the discharge operation includes
a first discharge operation performed in a state where the nozzle is at a position of the sample container or the reagent container, and
a second discharge operation performed while the nozzle is moving from the position of the sample container or the reagent container to a position of the reaction container, and
an operation amount of the syringe in the first discharge operation is smaller than an operation amount of the syringe in the second discharge operation.

2. The automatic analyzer according to claim 1, wherein
the sample or the reagent is discharged from the nozzle in at least the second discharge operation.

3. The automatic analyzer according to claim 1, wherein
backlash of the syringe is removed by end of the first discharge operation, and the sample or the reagent is discharged from the nozzle from start of the second discharge operation.

4. The automatic analyzer according to claim 1, wherein
backlash of the syringe remains at end of the first discharge operation, and during the second discharge operation, the backlash is removed and the sample or the reagent is discharged from the nozzle.

5. The automatic analyzer according to claim 1, wherein
an operation amount of the syringe in the first discharge operation is zero.

6. The automatic analyzer according to claim 1, comprising:
a cleaning tank allowing an outer side of the nozzle to be cleaned therein, wherein
the second discharge operation is performed in a state where the nozzle is at a position of the cleaning tank.

7. The automatic analyzer according to claim 6, wherein
in the second discharge operation, cleaning water hits the nozzle from start to end of the discharge of the sample or the reagent.

8. The automatic analyzer according to claim 6, wherein
the nozzle is stopped in the second discharge operation.

9. The automatic analyzer according to claim 1, wherein
the second discharge operation includes a plurality of operations performed when the nozzle is at different positions.

10. A dispensing method for dispensing a sample contained in a sample container or a reagent contained in a reagent container into a reaction container using an automatic analyzer, the automatic analyzer including a dispensing mechanism provided with a nozzle and a syringe and a control unit configured to control the dispensing mechanism, the dispensing method comprising:
a liquid aspiration step in which the control unit operates the syringe in an aspiration direction in a state where the nozzle is at a position of the sample container or the reagent container;
a first discharge step in which the control unit operates the syringe in a discharge direction in a state where the nozzle is at the position of the sample container or the reagent container;
a second discharge step in which the control unit operates the syringe in the discharge direction while the nozzle is moving from the position of the sample container or the reagent container to a position of the reaction container; and
a liquid discharge step in which the control unit operates the syringe in the discharge direction in a state where the nozzle is at the position of the reaction container, wherein
an operation amount of the syringe in the first discharge step is smaller than an operation amount of the syringe in the second discharge step.
